# EUROPÄISCHE PATENTSCHRIFT

(11) **EP 2 848 472 B1**
(45) Veröffentlichungstag und Bekanntmachung des Hinweises auf die Patenterteilung: **21.09.2016**
(21) Anmeldenummer: 14181431.9
(22) Anmeldetag: 19.08.2014
(51) Int. Cl.: B60R 7/06

(54) **Deckel zum schwenkbaren Verschließen eines in einem Kraftfahrzeuginnenraum befindlichen Stauraums**
Lid for pivotably closing a stowage space located in the passenger compartment of a motor vehicle
Couvercle à fermeture articulée d'un coffre se trouvant dans l'habitacle de véhicule

(30) Priorität: 11.09.2013 DE 102013218157
(43) Veröffentlichungstag der Anmeldung: 18.03.2015
(73) Patentinhaber: Magna Interiors GmbH, 94315 Straubing (DE)
(72) Erfinder: Meidinger, Christian, 94354 Haselbach (DE)
(74) Vertreter: Capitán García, Maria Nuria

(56) Entgegenhaltungen:
- EP-A1- 0 919 431

## Beschreibung

Die vorliegende Erfindung betrifft einen Deckel zum schwenkbaren Verschließen eines in einem Kraftfahrzeuginnenraum befindlichen Stauraums.

Staufächer sind an unterschiedlichen Stellen im Innenraum eines Kraftfahrzeugs angeordnet. Eine Vielzahl von derartigen Staufächern ist auch mittels eines Deckels verschließbar. Im Bereich der Instrumententafel von Kraftfahrzeugen ist beispielsweise auf der Beifahrerseite ein Handschuhkasten angeordnet. Dieser Handschuhkasten weist einen in einem Gehäuse gebildeten Aufnahmeraum auf, der üblicherweise über einen verschwenkbar gelagerten Deckel verschlossen bzw. zugänglich gemacht werden kann.

Ein derartiger Deckel ist aus der DE 27 55 836 A1 bekannt. Hierbei umfasst der Deckel einen zweischalig ausgeführten umschäumten Trägerkörper, der in einem Spritzgießverfahren einstückig hergestellt wird. Die beiden Schalenelemente sind dabei über ein Filmscharnier miteinander verbunden und werden vor dem Umschäumen über das Filmscharnier aufeinandergeklappt und durch randseitig angeordnete Clipsverbindungselemente aneinander festgelegt. Weiterhin weist der Trägerkörper zwei beabstandet an der unteren Längsseite des Trägerkörpers angeformte Lagerelemente auf. Diese dienen der schwenkbaren Anbindung des Deckels an einem karosseriefesten Element.

Weiterhin ist aus der EP 0 919 431 A1 ein Handschuhkasten mit einem Verschlussdeckel nach dem Oberbegriff von Anspruch 1 bekannt. Dieser Verschlussdeckel ermöglicht es einem Insassen verschiedene Funktions-elemente einfach und in unterschiedlicher Anordnung auf der Innenseite der Verschlussklappe des Handschuhkastens anzubringen. Dies wird dadurch erreicht, dass die Verschlussklappe zwei in Bezug zueinander schwenkbare Klappenteile umfasst. Die äußere Klappe lässt sich dabei sowohl gemeinsam mit dem inneren Klappenteil als auch getrennt von diesem verschwenken. Insgesamt lässt sich der Verschlussdeckel um eine horizontale Schwenkachse gegenüber einer Instrumententafel verschwenken. Diese schwenkbare Befestigung an der Instrumententafel kann mittels kammartig ineinandergreifender Lagerabschnitte des inneren und des äußeren Klappenteils erfolgen, die abwechselnd auf der Schwenkachse angeordnet sind und fluchtende Durchgangsbohrungen aufweisen.

Eine weitere Deckelkonstruktion ist aus der DE 198 10 156 A1 bekannt. Dieser vorbekannte Deckel, der insbesondere als Deckel für ein Handschuhfach eingesetzt wird, wird durch das Verbinden eines inneren Deckelelementes und eines äußeren Deckelelementes mittels Vibra-tionsschweißen hergestellt. Das innere Deckelelement weist hierfür Schweißrippen auf, welche beim Schweißvorgang durch Druck und Vibration aufgeschmolzen und mit dem Außenteil verbunden werden. Zur schwenkbaren Lagerung des Deckels werden Scharniere einerseits am Deckel und andererseits am Handschuhfach mittels Schraubverbindung angebracht. Zur Vermeidung der Entstehung von Einfallstellen beim oben genannten Vibrationsschweißen ist eine am Außenteil angeordnete einfallverhindernde Rippe vorgesehen.

Insgesamt ist bei der Herstellung der oben beschriebenen Deckel aus einem Kunststoffmaterial zum Verschließen von Öffnungen im Innenbereich von Kraftfahrzeugen ein hoher Investitionsbedarf in Bezug auf die Bereitstellung von Schweißanlagen und die dazugehörigen Werkzeuge erforderlich. Beim Zusammenfügen der Deckelhälften über das vorgenannte Vibrationsschweißen ist ein Aufheizen der Werkzeuge auf Temperaturen bis ca 200 Grad Celsius notwendig. Die aufgeheizten Werkzeuge in diesem Verfahrensschritt führen zu einer hohen Verletzungsgefahr.

Aufgabe der vorliegenden Erfindung ist es, einen Deckel zum schwenkbaren Verschließen einer Öffnung in einem Kraftfahrzeuginnenraum aus einem Kunststoffmaterial bereitzustellen, der einfach, kostengünstig und sicher herstellbar ist und der ein optisch gutes Erscheinungsbild aufweist.

Diese Aufgabe wird durch die im Anspruch 1 angegebenen Merkmale gelöst.

Durch die erfindungsgemäße Ausführung lässt sich ein Deckel herstellen, der ohne die oben genannten Probleme beim Schweißen herstellbar ist. Aus diesem Grund besitzt der Deckel ein optisch einwandfreies Erscheinungsbild. Die Problematik der Entstehung von Einfallstellen kann somit vermieden werden.

Alle vorgenannten Nachteile in Bezug auf das Vibrationsschweißen werden durch den entfallenden Herstellungsschritt vermieden. Insbesondere kann die Anschaffung und Verwendung einer entsprechenden Schweißanlage entfallen. Hierdurch ist eine kostengünstigere Fertigung möglich. Auch die beschriebenen Nachteile in Bezug auf eine Gefahr von Verletzungen beim Zusammenfügen der Teile beim Vibrationsschweißen entfallen.

Die Ausgestaltung des erfindungsgemäßen Deckels in einer zweiteiligen Ausgestaltung mit angespritzen Lagerschalen und Clipselementen ermöglicht eine Steck- bzw. Clipsverbindung beim Zusammenfügen. Das innere Deckelelement und das äußere Deckelelement werden formschlüssig miteinander verbunden. Dies kann in einem Verfahrensschritt bei der Montage erfolgen. Hierdurch ist eine schnelle und einfache Montage der Einzelteile möglich. Zusätzliche Werkzeuge werden hierbei nicht benötigt, so dass eine kostengünstige Herstellung des Deckels möglich ist.

Weitere vorteilhafte Ausgestaltungen und Weiterbildungen der erfindungsgemäßen Außenspiegelanordnung ergeben sich aus den Unteransprüchen.

Bevorzugte Ausführungsformen werden nachfolgend beispielshalber beschrieben, wobei veranschaulichend auf die beigefügten Zeichnungen Bezug genommen wird.

Es zeigen:
- Fig. 1: eine perspektivische Ansicht eines Ausschnitts einer Instrumententafel mit auf der Beifahrerseite eingefügtem Handschuhkasten mit verschwenkbar angebundenem Deckel,
- Fig. 2: einen Ausschnitt einer Ansicht eines erfindungsgemäßen Deckels von der Innenseite im Bereich der Lagerstellen,
- Fig. 3: einen Ausschnitt aus einem Gehäuse eines Staufaches im Bereich der Lagerstellen für den erfindungsgemäßen Deckel,
- Fig. 4: einen Schnitt durch den erfindungsgemäßen Deckel,
- Fig. 5: eine Detailansicht einer auf der Innenseite des äußeren Deckelelementes angeformten inneren Lagerschale; und
- Fig. 6: eine Detailansicht einer auf der Außenseite des inneren Deckelementes angeformten äußeren Lagerschale.

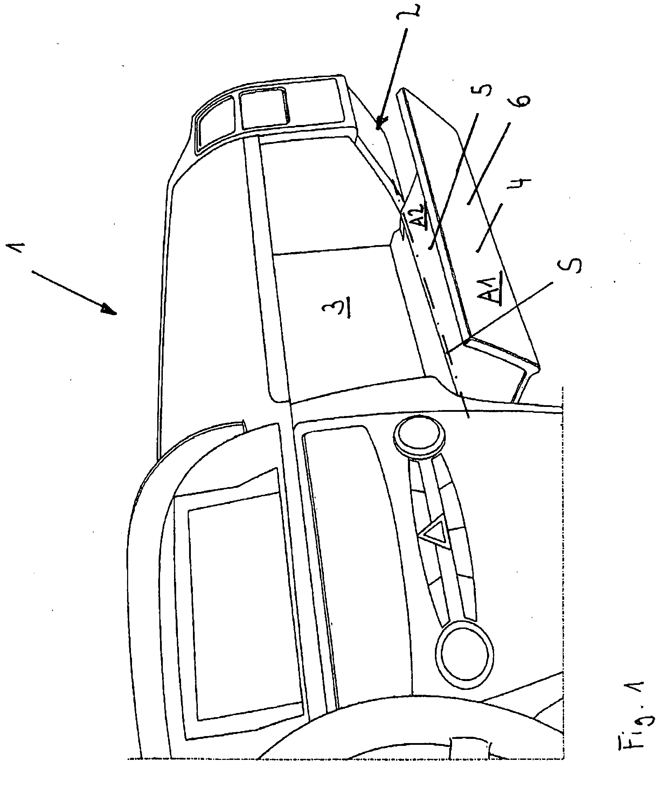

In Figur 1 zeigt in perspektivischer Ansicht einen Ausschnitt einer Instrumententafel 1, die auf der Beifahrerseite mit einem Handschuhfach 2 als Staufach ausgestattet ist. Das Handschuhfach 2 umfasst dabei einen Stauraum 3 innerhalb der Instrumententafel 1, wobei die Öffnung des Stauraums 3 mit einem Deckel 4 verschliessbar ist. Der Deckel 4 ist dabei schwenkbar um eine Schwenkachse S an der Instrumententafel 1 bzw. an einem Gehäuse des Handschuhfaches 2 angebunden. Durch die schwenkbare Lagerung kann der Stauraum 3 des Handschuhfachs 2 mittels des Deckels 4 verschlossen bzw. zugänglich gemacht werden. Die Figur 1 zeigt den geöffneten Zustand, wobei der Deckel 4 um die Schwenkachse S nach unten geklappt ist. Üblicherweise ist auch eine Verriegelungsmechanik vorgesehen, die ein Verriegeln des Deckels 4 in der geschlossenen Position ermöglicht. Derartige. Verriegelungsmechaniken sind bekannt und sind nicht näher dargestellt und auch nicht beschrieben.

Die vorliegende Erfindung wird nachfolgend anhand eines Deckels 4 für ein Handschuhfach 2 beschrieben, allerdings sind im Innenraum des Kraftfahrzeugs an vielen Stellen Fächer und Ablagen vorgesehen, die ebenfalls mit dem erfindungsgemäßen Deckel 4 ausgestattet sein können. Dabei kann die Schwenkachse selbstverständlich auch an einer oberen Randkante eines Staufaches oder an einer seitlichen Randkante vorgesehen sein.

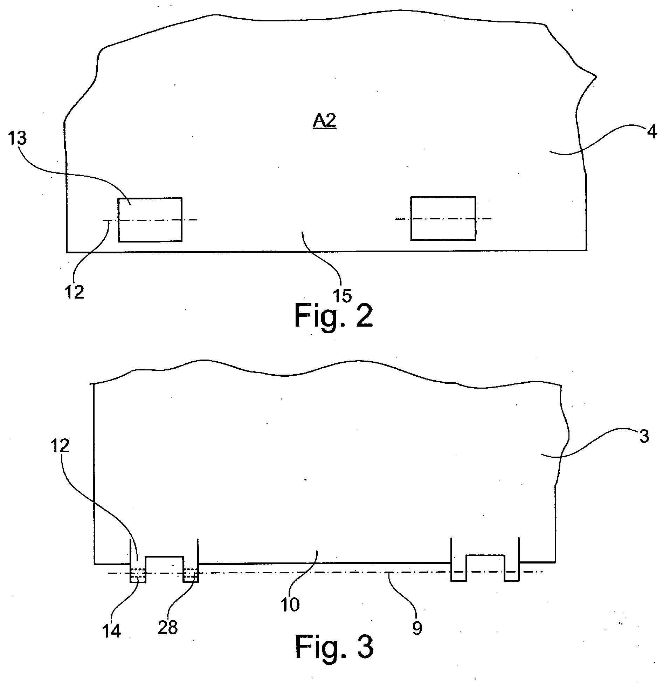

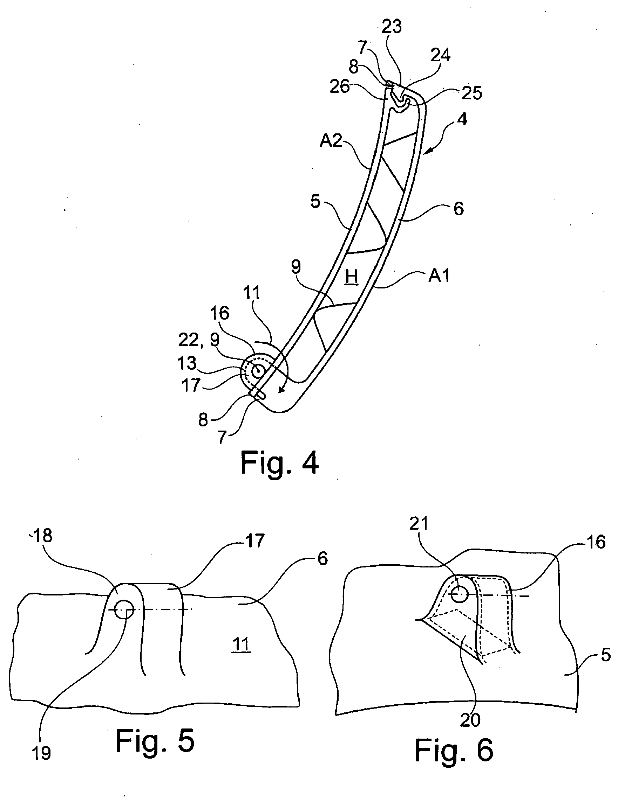

Der Deckel 4 ist zweiteilig ausgeführt und umfasst, wie es aus den Zeichnungen Fig. 2-4 ersichtlich ist, ein inneres Deckelelement 5 und ein äußeres Deckelelement 6. Beide Deckelelemente 5,6 bestehen aus einem Kunststoffmaterial und werden vorzugsweise in einem Spritzgießverfahren hergestellt. Das äußere Deckelelement 6 ist halbschalenförmig ausgeführt und weist eine Außenseite A1 (weist im eingebauten Zustand des Handschuhfachs zum Innenraum des Kraftfahrzeugs) und eine Innenseite I1 auf. Das äußere Deckelelement 6 ist im Wesentlichen rechteckig ausgeführt und weist eine Wölbung auf. Der Randbereich 7 des äußeren Deckelelementes 6 weist Anlagekanten 8 für das innere Deckelelement 5 auf. Das innere Deckelelement 5 weist eine Außenseite A2 auf, die im eingebauten und geschlossenen Zustand des Deckels 4 zum Innenraum des Staufachs 3 weist. Inneres Deckelelement 5 ist als gewölbtes plattenförmiges Element ausgeführt und bildet mit dem äußeren Deckelelement 6 im zusammengefügten Zustand einen geschlossenen Hohlkörper. Aus der Schnittdarstellung der Figur 4 kann man ersehen, dass der Deckel 4 in seinem Inneren einen Hohlraum H aufweist, der mit einer Versteifungsstruktur 9 verstärkt ausgebildet ist. Hierbei sind vorzugsweise auf den Innenseiten der beiden Deckelelemente 5, 6 Versteifungsrippen angepritzt. Der Deckel 4 ist hinsichtlich seiner Oberflächenkontur und -gestaltung an das Design der Instrumententafel 1 angepasst und ist vorzugsweise im geschlossenen Zustand in die Oberflächenkontur der Instrumententafel 1 bündig eingefügt.

Wie obenstehend kurz erläutert, ist der Deckel 4 an einer in einem unteren Randbereich 10 einer Staufachwandung bzw. Wandung eines Gehäuses des Handschuhfachs 2 oder Wandung der Instrumententafel 1 verschwenkbar um eine horizontal verlaufende Achse S angelenkt. Die Verschwenkbarkeit des Deckels 4 um die Schwenkachse S ist durch den Pfeil 11 angedeutet dargestellt. Die verschwenkbare Lagerung des Deckels 4 wird dabei durch eine Scharnierverbindung 12 erzielt, die ein deckelseitiges Scharnierelement, und ein handschuhfachseitiges bzw. instrumententafelseitiges Scharnierelement umfasst. Das deckelseitige Scharnierelement ist als Scharniersteg 13 ausgeführt. Aus der Figur 2, die einen Ausschnitt einer Ansicht auf die Außenseite A2 des inneren Deckelementes 5 des zusammengefügten Deckels 4 zeigt, ist ersichtlich, dass an einem unteren Randbereich 15 horizontal beabstandet zwei Scharnierstege 13 ausgeführt sind. Die Scharnierstege werden beim Spritzgießen angeformt ausgebildet.

Die Scharnierstege 13 sind dabei zweiteilig ausgestaltet und umfassen jeweils eine Lagerschale 16 und einen in der Lagerschale gelagerten Lagerbock 17. Die beiden Einzelteile sind aus den Detailansichten der Figuren 5 und 6 zu erkennen. Der Lagerbock 17 ist auf der Innenseite I1 des äußeren Deckelelementes 6 angespritzt und als stegförmiges Element mit halbkreisförmig ausgestältetem Endbereich 18 ausgeführt. In dem Endbereich 18 ist eine Durchgangsbohrung 19 eingebracht. Die Lagerschale 16 ist dabei als an der Außenseite A2 des inneren Deckelelementes 5 angeformtes als Hohlkörper ausgebildetes Element ausgeführt, welches zur Aufnahme des beschriebenen Lagerbockes 17 dient und entsprechend an die Abmessungen des Lagerbockes 17 angepasst ausgebildet ist. Aus der Detaildarstellung der Figur 6 kann man erkennen, dass die Lagerschale 16 eine Durchtrittsöffnung 20 zur Aufnahme des Lagerbockes 17 besitzt. In gegenüberliegenden Seitenwandungen der Lageschale 16 sind Durchgangsbohrungen 21 eingebracht, die zur Lagerung der Lagerachse 22 dienen und bei zusammengefügtem Deckel 4 mit der Durchgangsbohrung 19 des Lagerbockes 17 fluchtend verlaufen.

Die Figur 3 zeigt die handschuhfachseitigen Scharnierelemente, welche Lagerböcke 14 umfassen. Einem deckelseitigen Scharniersteg 13 sind dabei zwei Lagerböcke 14 zugeordnet, die horizontal beabstandet angeordnet sind. Dementsprechend sind am unteren Randbereich 10 zwei Lagerbockpaare 14 randseitig ausgeführt. In den nach außen weisenden Endbereichen 22 der Lagerböcke 14 sind ebenfalls Durchgangsbohrungen 28 eingebracht. Bei der Montage des Deckels 4 an der Instrumententafel 1 werden die Scharnierstege 13 in die Aussparungen zwischen den paarweise angeordneten Lagerböcke 14 derart gesteckt, dass die in den Scharnierstegen 13 und den Lagerböckchen 14 eingebrachte Durchgangsbohrungen (19, 21, 28) zueinander fluchtend ausgerichtet sind. Anschließend werden Lagerachsen 22 durch die Bohrungen der vorgenannten Scharnierelemente gesteckt und über nicht dargestellte Sicherungselemente vor einer achsialen Verschiebung gesichert.

Eine Verbindung des äußeren und inneren Deckelenlentes 5, 6 wird wie obenstehend bereits beschrieben im unteren Randbereich über die zweiteilig ausgeführten Scharnierstege 13 erreicht, die eine Steckverbindung darstellen. Eine Sicherung dieser Steckverbindung wird bei der Endmontage durch das Einfügen der Lagerachsen 22 erzielt. Bei der Montage der Deckelelemente 5, 6 werden die auf der Innenseite des äußeren Deckelelementes 6 angespritzten Lagerböcke 17 in die Lagerschalen 16 des inneren Deckelementes 5 gesteckt. Des Weiteren wird eine Verbindung der Deckelelemente 5, 6 über Rastverbindungselemente bewirkt. Aus der Schnittdarstellung der Figur 4 kann man erkennen, dass im oberen Randbereich 23 des äußeren Deckelelementes 6 nach innen ragende stegförmig ausgeführte Rastelemente 24 angeformt sind. An der Innenseite des inneren Deckelelements 5 sind im oberen Randbereich 26 entsprechend korrespondierende hakenförmige Raststege bzw. Rasthaken 25 ausgebildet. Diese Rasthaken 25 umgreifen die Rastelemente 24 und bilden eine lösbare Rastverbindung zwischen den Deckelelementen 5, 6. Es ist selbstverständlich, dass die Rastverbindung bzw. Clipsverbindung auch eine andere bekannte Form aufweisen kann. Rast bzw. Clipsverbindungen sind dem Fachmann bekannt. Die beschriebene Rastverbindung kann auch im Seitenbereich der Deckelelemente vorgesehen sein. Wie obenstehend beschrieben, sind die Scharnierverbindungen und die Rastverbindungen vorzugsweise an gegenüberliegenden Randbereichen des Deckels angeordnet.

Wesentlich hierbei ist, dass beim Zusammenfügen der Deckelelemente 5, 6 keine weiteren Hilfsmittel und keine Anlagen benötigt werden. Eine stoffschlüssige Verbindung zwischen den Teilen ist nicht vorgesehen. Die Scharnierelemente 13 sind ebenfalls einteilig an den Deckelelementen angeformt. Dies erfolgt beim Spritzgießen und entsprechendem Anspritzen der Elemente. Durch die oben stehend beschriebene zweiteilige Ausgestaltung der Scharnierstege 13 wird in dem gezeichneten unteren Randbereich des Deckels über die Scharnierstege eine einfache Steckverbindung zwischen den Deckelelementen 5, 6 erzielt.

## Patentansprüche

1. Deckel (4) zum schwenkbaren Verschließen eines in einem Kraftfahrzeuginnenraum befindlichen Stauraums (3), wobei der Deckel (4) aus einem Kunststoffmaterial besteht und einen Trägerkörper aus einem äußeren und inneren Deckelelement (5, 6) aufweist, die miteinander verbunden sind, und wobei der Deckel (4) weiterhin Scharnierelemente (13) zur schwenkbaren Lagerung aufweist, **dadurch gekennzeichnet, dass** das innere und das äußere Deckelelement (5, 6) über in ihrem Randbereich (7) angeordneter Elemente (16, 17) formschlüssig nander verbindbar ausgeführt sind, und diese formschlüssige Verbindung zumindest die Scharnierelemente (13) umfasst.

2. Deckel nach Anspruch 1, wobei die Scharnierelemente (13) zweiteilig ausgeführt sind, wobei zumindest ein erstes Element (17) an dem inneren Deckelelement (5) und zumindest ein zweites Element (16) an dem äußeren Deckelelement (6) angeformt ist, und wobei die beiden Elemente (16, 17) im zusammengefügten Zustand des Deckels formschlüssig ineinandergreifen und eine gemeinsame Durchgangsbohrung (19, 21) für eine Lagerachse (S) der schwenkbaren Lagerung aufweisen.

3. Deckel nach Anspruch 2, wobei die Scharnierelemente (13) als Scharnierstege ausgebildet sind und das erste Element als Lagerschale (16) ausgeführt und das zweite Element als Lagerbock (17) ausgeführt ist und der Lagerbock (17) formschlüssig in der Lagerschale (16) gelagert angeordnet ist.

4. Deckel nach einem der vorangehenden Ansprüche, wobei die Verbindung zwischen äußerem und inneren Deckelelement (5, 6) weiterhin mindestens, eine Rast- und oder Clipsverbindung (24, 25) umfasst.

5. Deckel nach Anspruch 4, wobei die Rastverbindung zumindest im oberen Randbereich (23) des äußeren Deckelelementes (6) nach innen ragende stegförmig ausgeführte Rastelemente (24) umfasst, die mit korrespondierenden hakenförmigen Raststegen (25), die im oberen Randbereich (26) der Innenseite des inneren Deckelelements (5) ausgebildet sind, zusammenwirken, wobei die Rasthaken (25) die Rastelemente (24) umgreifen.

6. Deckel nach einem der vorangehenden Ansprüche, wobei das äußere Deckelement (6) halbschalenförmig ausgebildet ist und mit dem inneren plattenförmig ausgebildeten Deckelelement (5) einen geschlossenen Hohlkörper bildet.

7. Deckel nach Anspruch 6, wobei der Deckel (4) in seinem Inneren mit einer Versteifungsstruktur (9) ausgeführt ist.

8. Handschuhfach einer Instrumententafel eines Kraftfahrzeugs mit einem gemäß der Ansprüche 1-7 verschwenkbar angeordneten Deckel.(4), wobei die Scharnierverbindung eine Schwenkachse (S) aufweist und deckelseitig angeordnete Scharnierelemente (13), handschufachseitige Scharnierelemente (14) und Lagerachsen (22) umfasst.

## Claims

1. Cover (4) for swivel closure of a storage space (3) in a passenger compartment of a motor vehicle, wherein the cover (4) is made of a plastic material and a carrier body comprises an outer and inner cover element (5, 6) which are connected together, and wherein the cover (4) further comprises hinged elements (13) for swivel mounting, **characterised in that** the inner and outer cover elements (5, 6) are designed so as to be connectable to each other in a form-fitting manner via elements (16, 17) arranged in the edge regions (7) of same, and said form-fit connection comprises at least the hinge elements (13).

2. Cover according to claim 1, wherein the hinge elements (13) are designed as two parts, wherein at least one first element (17) is formed on the inner cover element (5) and at least one second element (16) is formed on the outer cover element (6), and wherein in the joined-together state of the cover, both elements (16, 17) engage in one another in a form-fitting manner and comprise a joint through-hole (19, 21) for a mounting axis (S) of the swivel mounting.

3. Cover according to claim 2, wherein the hinge elements (13) are formed as hinge strips and the first element is designed as a bearing cup (16) and the second element is designed as a bearing block (17), and the bearing block (17) is arranged mounted in a form-fit manner in the bearing cup (16).

4. Cover according to one of the preceding claims, wherein the connection between the outer and inner cover element (5, 6) further comprises a latch and/or clip connection (24, 25).

5. Cover according to claim 4 wherein, at least in the upper edge region (23) of the outer cover element (6), the latch connection comprises strip-shaped latch elements (24) designed to project inwardly, which engage with the corresponding hook shaped latch strips (25), which are formed in the upper edge region (26) of the inside of the inner cover element (5), wherein the latching hooks (25) engage the latch elements (24).

6. Cover according to one of the preceding claims, wherein the outer cover element (6) is formed to have a half-shell shape and forms a closed hollow body together with the inner plate shaped cover element (5).

7. Cover according to claim 6, wherein the cover (4) is designed with a reinforcing structure (9) in the interior thereof.

8. Glove compartment of a dashboard of a motor vehicle having a swivel arrangement cover (4) according to claims 1-7, wherein the hinge connection has a swivel axis (S) and comprises hinge elements (13) arranged on the cover side, hinge elements (14) arranged on the glove compartment side, and a mounting axis (22).

## Revendications

1. Couvercle (4) pour la fermeture oscillante d'un compartiment (3) se trouvant à l'intérieur d'un véhicule, ledit couvercle (4) étant constitué en matériau synthétique et présentant un corps porteur composé d'un élément de couvercle externe et interne (5, 6), lesquels sont assemblés entre eux, ledit couvercle (4) présentant en outre des éléments charnières (13) comme logement oscillant, ledit couvercle **caractérisé en ce que** l'élément de couvercle interne et l'élément de couvercle externe (5,6) sont réalisés de manière à pouvoir s'assembler géométriquement par l'intermédiaire d'éléments (16,17) disposés dans leur zone marginale (7) et **en ce que** cet assemblage géométrique comprend au moins les éléments charnières (13).

2. Couvercle selon la revendication 1, les éléments charnières (13) étant réalisés en deux parties, au moins un premier élément (17) épousant la forme de l'élément de couvercle interne (5) et au moins un deuxième élément (16) épousant la forme de l'élément de couvercle externe (6), les deux éléments (16, 17) s'imbriquant géométriquement quand le couvercle est à l'état assemblé, et présentant un orifice traversant commun (19, 21) pour un axe du palier (S) du logement oscillant.

3. Couvercle selon la revendication 2, les éléments charnières (13) étant formés comme segments articulés, le premier élément étant réalisé comme coquille de coussinet (16), et le deuxième élément comme support de coussinet (17), et le support de coussinet (17) étant logé géométriquement dans la coquille de coussinet (16).

4. Couvercle selon l'une des revendications qui précède, la liaison entre les éléments de couvercle externe et interne (5, 6) comprenant en outre au moins une liaison à encliqueter et ou à clipser (24, 25).

5. Couvercle selon la revendication 4, la liaison à encliqueter comprenant les éléments à encliqueter (24) en forme de segments dépassant vers l'intérieur au moins dans la zone marginale (23) supérieure de l'élément de couvercle externe (6), lesdits éléments agissant en coordination avec des éléments (25) correspondants en forme de crochet qui sont réalisés dans la zone marginale (26) supérieure de la face intérieure de l'éléments de couvercle interne (5), les crochets à encliqueter (25) entourant les éléments à encliqueter (24).

6. Couvercle selon l'une des revendications qui précède, l'élément de couvercle externe (6) ayant la forme d'une demi-coque et formant avec l'élément de couvercle interne (5) en forme de plaque un corps creux fermé.

7. Couvercle selon la revendicaiton 6, le couvercle (4) étant réalisé en son intérieur avec une structure rigidifiante (9).

8. Boîte à gants du tableau de bord d'un véhicule automobile avec un couvercle (4) disposé de manière oscillante selon les revendications 1-7, la liaison charnière présentant un axe d'articulation (S) et comprenant des éléments charnières (13) disposés côté couvercle, des éléments charnières (14) disposés côté boîte à gants et des axes du palier (22).
